# EUROPÄISCHE PATENTSCHRIFT

(11) **EP 1 323 631 B1**
(45) Veröffentlichungstag und Bekanntmachung des Hinweises auf die Patenterteilung: **12.05.2004**
(21) Anmeldenummer: 01130833.5
(22) Anmeldetag: 27.12.2001
(51) Int. Cl.: B64C 1/12

(54) **Metallisches Strukturbauteil für ein Flugzeug**
Aircraft metallic structural element
Elément de structure métallique pour un aéronef

(43) Veröffentlichungstag der Anmeldung: 02.07.2003
(73) Patentinhaber: Airbus Deutschland GmbH, 21129 Hamburg (DE)
(72) Erfinder: Schmidt, Hans-Jürgen, Dipl.-Ing., 21614 Buxtehude (DE); Assler, Herwig, Dr.-Ing., 21635 Jork (DE)
(74) Vertreter: Hansmann, Dierk, Dipl.-Ing.

(56) Entgegenhaltungen:
- EP-A- 1 166 950
- DE-C- 19 924 909
- US-A- 3 201 862
- US-A- 5 842 317

## Beschreibung

Die Erfindung betrifft ein metallisches Strukturbauteil für ein Flugzeug, wobei das Strukturbauteil mindestens ein Hautblech sowie auf das Hautblech aufgebrachte mehrere Versteifungsprofile aufweist und die Versteifungsprofile mit dem Hautfeld integral verbunden sind.

Ein Großteil der Flugzeugstrukturen wie z.B. Rumpf und Flügel wird aus metallischen Werkstoffen hergestellt. Um primär Steifigkeits- und Festigkeitsanforderungen zu erfüllen, besteht das dabei vorherrschende Konstruktionsprinzip darin, ein Hautblech mit Versteifungen zu versehen. Als besonders bedeutendes Beispiel ist der Rumpf zu nennen, dessen Außenhaut in Längsrichtung durch Stringern und in Umfangsrichtung mit Spanten verstärkt ist. Als Fügeverfahren wird üblicherweise das Nieten bzw. Kleben verwendet, wobei von einer differentialen Bauweise gesprochen wird.
Weiterhin sind integrale Strukturbauteile bekannt, bei denen eine direkte Verbindung zwischen Haut und Versteifung hergestellt wird. Diese integrale Bauweise kann z.B. durch gleichzeitiges Extrudieren von Haut und Versteifung oder den Einsatz von Schweißverfahren zur Verbindung von Haut und Versteifung erzeugt werden. Bekannt ist der Einsatz des Laserstrahlschweißens zur Herstellung eines Strukturbauteils in geschweißter Haut-Stringer-Bauweise beispielsweise aus DE 196 39 667 C1.
Derartige Strukturbauteile werden als Rumpfschalen in einem Flugzeug verwendet. Als Folge einer mechanischen Belastung, die sowohl statisch als auch zyklisch auftreten kann, können sich Risse in dem verstärkten Hautblech bilden und ausbreiten. Um Schädigungszustände dieser Art im Flugzeugentwurf zu berücksichtigen, werden sowohl Anforderungen an das Rissfortschrittsverhalten als auch an das Restfestigkeitsverhalten der Strukturbauteile gestellt. Das geforderte Schadenstoleranzverhalten ist u.a. davon abhängig, wie sich ein senkrecht zur Versteifung ausbreitender Hautriss verhält, wenn er auf diese trifft.
Im Fall einer differentialen Bauweise läuft der Hautriss unter der Versteifung hindurch. Die Versteifung bleibt dabei ungeschädigt und überbrückt der Riss, so dass als positiver Effekt der Riss in seiner weiteren Ausbreitung behindert wird. Bei einer solchen Differentialbauweise wirken die genieteten oder geklebten Versteifungen als Rissstopper bzw. Rissverzögerer. Der Rissfortschritt in der Rumpfbeplankung wird gestoppt bzw.verzögert, da die Rissspitze durch die genietete oder geklebte Versteifung für eine bestimmte Anzahl von Lastwechseln zusammengehalten wird.
Im Fall einer integralen Bauweise teilt sich die Rissspitze im Fußbereich der Versteifung in einen Hautriss und einen Versteifungsriss auf und beide Risse breiten sich in den Teilkomponenten unabhängig voneinander aus. Die durch einen Teilanriss geschädigte Versteifung besitzt im Gegensatz zu einem differential angebrachten Versteifungsprofil sowohl eine reduzierte Festigkeit als auch eine reduzierte Steifigkeit. Dadurch erfolgt kein effektives Zusammenhalten des Hautrisses, so dass dieser in seiner weiteren Ausbreitung unzureichend behindert wird. Dieses Verhalten führt zu einer verminderten Restfestigkeit und zu einem ungünstigen Rissfortschrittsverhalten. In Bereichen, in denen die Restfestigkeit als Auslegungskriterium maßgebend ist, müssten die Schalen aufgedickt werden, um eine ausreichende Restfestigkeit zu erreichen. Das führt zu unakzeptablen Gewichtserhöhungen insbesondere in den Seiten- und Oberschalenbereichen des Rumpfes.
In der Patentschrift DE 199 24 909 C 1 wird als eine Lösung dieses Problems bei einem integralen Strukturbauteil eine Aufdickung im Fußbereich der Versteifung zur Rissverzögerung bzw. Ablenkung vorgeschlagen. Da die Aufdickung aber integral ist, d.h. die Versteifung und die Aufdickung sind eine gemeinsame Komponente (Verbindung auf atomarer Ebene), besteht grundsätzlich weiterhin die Gefahr einer fortschreitenden Rissausbreitung über den gesamten Bereich der Versteifung.

In Dokument US-A-5842317, welches als nächstliegender Stand der Technik betrachtet wird, ist ein Flugzeugstrukturbauteil gezeigt, welches integrale Versteifungsprofile aufweist. Es sind Mittel zur Rissverhinderung beschrieben, die primär auf der Existenz eines Dickensprungs bzw. eines Überhangs beruhen in Verbindung mit inneren Spannungen, die durch plastische Deformation eingebracht werden. Eine lokale Aufdickung dient dabei der Aufnahme einer Zusatzkomponente. Das lokale Ein- bzw. Anbringen von Zusatzkomponenten, wie beispielsweise Fasern oder Drähte erfolgt nur oberflächlich, beispielsweise durch Kleben bzw. in einem zugequetschten Spalt.

Der vorliegenden Erfindung liegt somit die Aufgabe zugrunde, eine großflächige Verbreitung eines Risses in einem metallischen Strukturbauteil zu verhindern und damit ein verbessertes Rissfortschrittsverhalten und eine Erhöhung der Restfestigkeit zu erreichen, wobei gleichzeitig die Anforderungen im Flugzeugbau an eine leichte Bauweise zu berücksichtigen sind.

Diese Aufgabe wird bei einem Strukturbauteil durch die im Patentanspruch 1 genannten Maßnahmen gelöst.

Dabei ist insbesondere vorteilhaft, dass durch Erhöhung der Restfestigkeit eines metallischen Strukturbauteils in Integralbauweise ein Einsatz eines derartigen Bauteils für Rumpfschalen eines Flugzeuges auch in primär auf Zug belasteten und damit ermüdungskritischen Bereichen möglich ist. So können geschweißte Rumpfschalen für den gesamten Rumpf angewendet werden, was aufgrund der Vorteile in der Fertigung den Herstellaufwand reduziert. Da die rissstoppenden bzw. - verzögernden Maßnahmen innerhalb des Versteifungsprofils vorgenommen werden und keine wesentlichen Auswirkungen auf die Versteifungsgeometrie haben, d.h. insbesondere keine Verdickungen bzw. Verstärkungen notwendig sind, ist eine weitere Verwendbarkeit von den in der Fertigung existierenden Fertigungsvorrichtungen möglich.

Mit der erfindungsgemäßen Lösung werden die Nachteile im Rissfortschrittsverhalten von geschweißten Schalen, d.h. integralen Strukturen eliminiert. Bei Primärrissen in der Beplankung, d.h. in der Rumpfhaut wird der gleichzeitig in den Versteifungsprofilen sich fortsetzende Riss durch die eingebrachten internen Grenzflächen gestoppt oder in ausreichender Form verzögert.

Weiterbildungen und vorteilhafte Ausgestaltungen sind in den Ansprüchen 2 bis 11 angegeben. Weitere Vorteile ergeben sich aus der nachfolgenden Detailbeschreibung.

In der Zeichnung sind Ausführungsbeispiele der Erfindung dargestellt, die nachstehend anhand der Figuren 1 bis 3 näher beschrieben sind. In den Figuren sind gleiche Bauteile mit gleichen Bezugszeichen versehen.

Es zeigen:
- Fig. 1: einen Querschnitt durch ein in Integralbauweise ausgeführtes Strukturbauteil im Bereich eines Stringers mit einer erfindungsgemäße Maßnahme zur Rissverzögerung bzw. Rissverhinderung in einer ersten Ausführung,
- Fig. 2: einen Querschnitt durch ein erfindungsgemäßes Strukturbauteil im Bereich eines Stringers in einer zweiten Ausführungsform und
- Fig. 3: einen Querschnitt durch ein erfindungsgemäßes Strukturbauteil im Bereich eines Stringers in einer dritten Ausführungsform.

In den Figuren ist jeweils ein Ausschnitt eines metallischen Strukturbauteils 1 im Bereich eines Versteifungsprofils 2 gezeigt. Das Versteifungsprofil 2 ist als ein für eine Flugzeugrumpfstruktur in Flugzeuglängsrichtung verlaufender Stringer 3 ausgebildet, der auf ein Hautfeld 4 aufgeschweißt ist oder der in sonstiger Art in integraler Bauweise eine direkte Verbindung zwischen Haut und der Versteifung bildet. Eine weitere Möglichkeit einer integralen Bauweise ist das gleichzeitige Extrudieren bzw. Strangpressen von einem Hautfeld 4 und den Versteifungsprofilen 2 (bzw. Stringern 3). Für ein Strukturbauteil 1 zur Verwendung als Rumpfschale eines Flugzeuges sind eine Vielzahl derartiger Stringer 3 auf einem großflächigen Hautfeld in Flugzeuglängsrichtung angeordnet.

In Fig. 1 ist ein Querschnitt durch ein in Integralbauweise ausgeführtes Strukturbauteil 1 im Bereich eines Stringers 3 dargestellt. Als Maßnahme zur Rissverzögerung bzw. Rissverhinderung wird vorgeschlagen, dass innerhalb des Versteifungsprofils 2 eine interne Grenzfläche 5 (mit Grenzflächenlängen L₁, L₂ und L₃) eingebracht wird, in welcher der Riss angehalten werden kann bzw. abgelenkt wird, so dass die dahinterliegende Teilstruktur (hier der oberhalb der Grenzfläche 5 verbleibende Teil des Stringerstegs 6 sowie des Stringerkopfs 7) ungeschädigt bleibt. Die Lage der Grenzfläche 5 im Versteifungsprofil 2 wird in der ersten Ausführungsform durch eine in den Stringersteg 6 eingebrachte Teilkomponente 8 - hier ein schmales Rechteck-Profil (I-Profil) - bestimmt.
Das I - Profil 8 wird seitlich in eine am Stringersteg 6 vorgesehene Aufnahme 9 eingebracht. Dafür sind verschiedene Fügeverfahren anwendbar, beispielsweise kann das I - Profil 8 in die Aufnahme 9 eingeklebt, gelötet oder gequetscht werden.
Durch das eingebrachte I-Profil 8 sind drei Grenzflächenlängen L₁, L₂ und L₃ gebildet, wobei vorzugsweise zur wirksamen Verhinderung einer Rissausbreitung die Summe aller Grenzflächenlängen L₁, L₂ und L₃ größer oder gleich der mittleren Dicke der Versteifung (_{Σ}L_{i ≥}Tₘᵢₜₜₑₗ ) ist. Alternativ zu dieser gezeigten Ausführungsform sind auch andere geometrische Querschnittsformen der einzubringenden Teilkomponente wie runde (beispielsweise kreisförmige) oder eckige (beispielsweise trapezförmige) Profile möglich. Auch eine Materialauswahl für die Teilkomonente unabhängig vom Material des Versteifungsprofils ist möglich, ohne sich auf schweißbare bzw. extrudierbare Materialien zu beschränken.
Zur Wirksamkeit der Maßnahme zur Erhöhung der Restfestigkeit des Strukturbauteits 1 ist vorgesehen, dass die Summe aller Grenzflächenlängen L₁, L₂, L₃... L, größer als oder mindestens gleich der mittleren Dicke des Versteifungsprofils 2 (_{Σ}L_{i ≥}Tₘᵢₜₜₑₗ ) ist. Die Lage der Grenzfläche ist dabei so zu wählen, dass ein sich senkrecht zur Belastungsrichtung (Belastungsrichtung ist auch Versteifungsrichtung, d.h. Stegrichtung) ausbreitender Riss im wesentlichen im rechten Winkel auf diese trifft. Die Grenzfläche zeichnet sich dadurch aus, dass die Energiefreisetzungsrate für eine 90°-Rissablenkung größer als die Energiefreisetzungsrate für einen Risseintritt in den dahinterliegenden Teil des Versteifungsprofils 2 ist.

In Fig. 2 ist ein Querschnitt durch ein erfindungsgemäßes Strukturbauteil 1 im Bereich eines Stringers 3 in einer zweiten Ausführungsform ersichtlich. In das integrale Strukturbauteil 1 ist eine interne Grenzfläche 5' in der Form eingebaut worden, dass das Versteifungsprofil 2 an der vom Hautfeld 4 abgewanden Seite der Grenzfläche 5' durch eine separate Teilkomponente 10 gebildet wird, die so geformt ist, dass sich die Versteifungsgeometrie nur unwesentlich ändert und somit eine zusätzliche Vergrößerung und damit eine zusätzliche Gewichtserhöhung des Bauteils verhindert wird. Vorzugsweise ist die Größe bzw. Restquerschnittsfläche A, des integral an der Haut 4 angebundenen Stegfußes 11 (Rest des Stringersteges 6) zur Erreichung einer wirksamen Erhöhung der Restfestigkeit kleiner als die Hälfte der gesamten Querschnittsfläche des Versteifungsprofils 2, was mit folgender Beziehung ausgedrückt werden kann: A₁ < A_{ges}/2. Zur Lage der Grenzfläche 5' wird ausdrücklich auf die Beschreibung der ersten Ausführungsform verwiesen, da auch hier die horizontale und vertikale Anordnung der Grenzfläche 5' durch Absätze innerhalb der Anbindung zwischen der Teilkomponente 10 und dem Stegfuß 11 in der Form beeinflusst werden kann, dass ein sich senkrecht zur Belastungsrichtung (d.h. Versteifungsrichtung) ausbreitender Riss hauptsächlich im rechten Winkel auf die Grenzfläche 5' trifft. Die Anbindung der Teilkomponente 10 ist mit in der Differentialbauweise üblichen Fügeverfahren, beispielsweise mittels Kleben, Löten oder Quetschen möglich.

Mit der beschriebenen zweiten Ausführungsform des Strukturbauteils 2 ergibt sich die Möglichkeit, als Teilkomponente 10 einen anderen Werkstoff bzw. Werkstoffverbund (organischer, metallischer und/oder keramischer Art) einzusetzen. Neben monolitischen Werkstoffen können beispielsweise auch Verbundwerkstoffe Verwendung finden. Auf diese Weise können auch nicht extrudierbare oder nicht schweißbare Materialien zum Einsatz kommen ohne auf die Vorteile einer integralen Bauweise verzichten zu müssen. Die integrale Bauweise ermöglicht unter anderem eine schnellere und kostengünstigere Fertigung und die Möglichkeit der Realisierung von Gewichtseinsparungen.

In Fig. 3 ist ein Querschnitt durch ein erfindungsgemäßes Strukturbauteil 1 im Bereich eines Stringers 3 in einer dritten Ausführungsform ersichtlich. In das integrale Strukturbauteil 1 ist eine interne Grenzfläche 5" durch Einbringen einer separaten Komponente 12 innerhalb des Versteifungsprofils 2 erzeugt worden.
Die geometrische Form dieser Komponente 12 ist vorzugsweise rechteckförmig bzw. quadratisch, möglich sind jedoch auch andere Querschnittsformen wie rund oder vieleckig, wobei das bereits zur ersten Ausführungsform Ausgeführte auch hier gilt und vorgesehen ist, dass die Summe aller Grenzflächenlängen L₁, L₂, L₃ und L₄ größer oder zumindest gleich der mittleren Dicke des Versteifungsprofils 2 ist (_{Σ}L_{i ≥}Tₘᵢₜₜₑₗ ). Die Lage der Grenzfläche ist dabei so zu wählen, dass ein sich senkrecht zur Belastungsrichtung (Belastungsrichtung ist auch Versteifungsrichtung) ausbreitender Riss im wesentlichen im rechten Winkel auf diese trifft.
Für eine in das Versteifungsprofil 2 eingebrachte Komponente 12 zur Bildung einer internen Grenzfläche 5" kann unabhängig vom Material des Versteifungsprofils 2 eine Materialauswahl getroffen werden, die auch andere Werkstoffe oder Werkstoffverbunde (organischer, metallischer und/oder keramischer Art) beinhaltet. Beispielsweise kann als Komponente 12 Stahldraht verwendet werden.
Eine Herstellung des Versteifungsprofils 2 mit mindestens einer integrierten Komponente 12 zur Rissverhinderung ist beispielsweise möglich, indem beim Extrudieren des Versteifungsprofils diese Komponente 12 mit eingebracht wird.
Falls Haut und Versteifungsprofil nicht gleichzeitig extrudiert werden, kann danach das Versteifungsprofil 2 in bekannter Weise an das Hautfeld 4 geschweißt werden.
Möglich ist es weiterhin, ein Hohlprofil zu extrudieren und die Komponente 12 einzufügen, beispielsweise mittels Kleben, Löten oder Quetschen.

## Patentansprüche

1. Metallisches Strukturbauteil für ein Flugzeug, wobei das Strukturbauteil (1) mindestens ein Hautblech (4) sowie auf das Hautblech (4) aufgebrachte mehrere Versteifungsprofile (2) aufweist und die Versteifungsprofile (2) mittels einer integralen Verbindung mit dem Hautfeld (4) verbunden sind, **dadurch gekennzeichnet, dass** innerhalb der Versteifungsprofile (2) eine interne Grenzfläche (5; 5'; 5") zum Verhindern einer Rissausbreitung eingebracht wird, wobei die Grenzfläche (5, 5', 5") durch mindestens eine separate Komponente (8; 10; 12) innerhalb des Versteifungsprofilquerschnitts gebildet ist unter Vermeidung lokaler Aufdickungen.

2. Metallisches Strukturbauteil nach Anspruch 1, **dadurch gekennzeichnet, dass** als separate Komponente ein Rechteckprofil (8) in eine seitlich am Versteifungsprofilsteg (6) vorgesehene und entsprechend geformte Aufnahme (9) eingefügt wird.

3. Metallisches Strukturbauteil nach Anspruch 2, **dadurch gekennzeichnet, dass** das Rechteckprofil (8) als ein I-Profil (8) ausgebildet ist, wobei die Längsausdehnung des I-Profil (8) in Stegrichtung des Versteifungsprofilstegs (6) verläuft.

4. Metallisches Strukturbauteil nach Anspruch 1, **dadurch gekennzeichnet, dass** die separate Komponente durch ein Rechteckprofil (12) gebildet ist, welches innerhalb des Versteifungsprofilstegs (6) angeordnet ist.

5. Metallisches Strukturbauteil nach Anspruch 1, **dadurch gekennzeichnet, dass** die separate Komponente (12) einen runden Querschnitt aufweist.

6. Metallisches Strukturbauteil nach Anspruch 1, **dadurch gekennzeichnet, dass** die separate Komponente durch eine separate Teilkomponente (10) gebildet ist, die an einen Stegfuß (11) des Versteifungsprofilstegs (6) angeordnet ist und deren Form im wesentlichen der üblichen Versteifungsgeometrie (3) entspricht.

7. Metallisches Strukturbauteil nach einem der Ansprüche 1 bis 6, **dadurch gekennzeichnet, dass** die Summe aller Grenzflächenlängen (L₁, L₂, L₃ und Lᵢ₎ größer oder zumindest gleich als die mittlere Dicke des Versteifungsprofils (2) ist (_{Σ}L_{i≥}Tₘᵢₜₜₑₗ).

8. Metallisches Strukturbauteil nach einem der Ansprüche 1 bis 7, **dadurch gekennzeichnet, dass** die Grenzfläche (5; 5'; 5") in dem Versteifungsprofil (2) so gelegt ist, dass ein sich senkrecht zur Belastungsrichtung (in Stegrichtung) ausbreitender Riss im wesentlichen im rechten Winkel auf die Grenzfläche (5; 5'; 5") trifft.

9. Metallisches Strukturbauteil nach einem der Ansprüche 1 bis 8, **dadurch gekennzeichnet, dass** die Restquerschnittsfläche (A,) eines integral an der Haut (4) angebundenen Stegfußes (11) kleiner als die Hälfte der gesamten Querschnittsfläche des Versteifungsprofils (2) ist (A₁ <A_{ges}/2).

10. Metallisches Strukturbauteil nach einem der vorangegangen Ansprüche, **dadurch gekennzeichnet, dass** die separate Komponente (8; 10; 12) aus anderen Werkstoffen oder Werkstoffverbunden als das integrale Strukturbauteil (1) aufgebaut ist.

11. Metallisches Strukturbauteil nach Anspruch 10, **dadurch gekennzeichnet, dass** Werkstoffverbunde für eine separate Komponente (8; 10; 12) aus organischen, metallischen und/oder keramischen Bestandteilen besteht.

## Claims

1. Metal structural member for an aircraft, wherein the structural member (1) has at least one metal skinplate (4) as well as a number of stiffening profiles (2) applied to the said metal skinplate (4) and the said stiffening profiles (2) are connected to the skin panel (4) by means of an integral connection, **characterised in that** an internal boundary surface (5; 5'; 5") is incorporated inside the stiffening profiles (2) for preventing crack propagation, the said boundary surface (5; 5' ; 5") being formed by at least one separate component (8; 10; 12) inside the cross-section of the stiffening profile, while avoiding local thickened-up portions.

2. Metal structural member according to claim 1, **characterised in that** a rectangular profile (8) is inserted, as a separate component, in a correspondingly shaped receptacle (9) provided laterally on the stiffening profile web (6).

3. Metal structural member according to claim 2, **characterised in that** the rectangular profile (8) is constructed as an I-profile (8), the longitudinal extension of the said I-profile (8) running in the direction of the stiffening profile web (6).

4. Metal structural member according to claim 1, **characterised in that** the separate component is formed by a rectangular profile (12) which is disposed inside the stiffening profile web (6).

5. Metal structural member according to claim 1, **characterised in that** the separate component (12) has a round cross-section.

6. Metal structural member according to claim 1, **characterised in that** the separate component is formed by a separate partial component (10) which is disposed on a base (11) of the stiffening profile web (6) and whose shape substantially corresponds to the ordinary stiffening geometry (3).

7. Metal structural member according to one of claims 1 to 6, **characterised in that** the sum of all the boundary face lengths (L₁, L₂, L₃ and Lᵢ) is greater than, or at least equal to, the mean thickness of the stiffening profile (2) (ΣLᵢ≥Tₘₑₐₙ).

8. Metal structural member according to one of claims 1 to 7, **characterised in that** the boundary surface (5; 5'; 5") is located in the stiffening profile (2) in such a way that a crack spreading perpendicularly to the direction of loading (in the direction of the web) encounters the boundary surface (5; 5'; 5") substantially at right angles.

9. Metal structural member according to one of claims 1 to 8, **characterised in that** the residual cross-sectional area (A₁) of a web base (11) integrally fastened to the skin (4) is smaller than half the total cross-sectional area of the stiffening profile (2) (A₁<A_{ges}/2).

10. Metal structural member according to one of the preceding claims, **characterised in that** the separate component (8; 10; 12) is built up from different materials or material composites from the integral structural member (1).

11. Metal structural member according to claim 10, **characterised in that** material composites for a separate component (8; 10; 12) consist of organic, metal and/or ceramic constituents.

## Revendications

1. Elément de structure métallique pour un aéronef, ledit élément (1) présentant au moins une tôle de recouvrement (4) ainsi que plusieurs profils de renforcement (2) disposés sur la tôle de recouvrement (4), les profils de renforcement (2) étant reliés à la tôle de recouvrement (4) par l'intermédiaire d'une liaison intégrale et **caractérisé en ce que** une surface limite intérieure (5 ; 5' ; 5") a été insérée à l'intérieur des profils de renforcement pour éviter la propagation de fissures, la surface limite (5, 5', 5") étant constituée d'au moins une composante distincte (8 ; 10 ; 12) à l'intérieur de la section transversale de profil de renforcement, en évitant les épaisissements locaux.

2. Elément de structure métallique selon la revendication 1, **caractérisé en ce que** un profil rectangulaire (8) a été inséré comme composante distincte dans une réception (9) prévue latéralement contre l'entretoise de profil de renforcement (6) et formée en conséquence.

3. Elément de structure métallique selon la revendication 2, **caractérisé en ce que** le profil rectangulaire (8) a été conçu sous la forme d'un profil en I (8), l'extension longitudinale du dit profil (8) s'étendant dans la direction de l'entretoise de profil de renforcement (6).

4. Elément de structure métallique selon la revendication 1, **caractérisé en ce que** la composante distincte est formée par un profil rectangulaire (12) disposé à l'intérieur de l'entretoise de profil de renforcement (6).

5. Elément de structure métallique selon la revendication 1, **caractérisé en ce que** la composante distincte (12) présente une section transversale ronde.

6. Elément de structure métallique selon la revendication 1, **caractérisé en ce que** la composante distincte est formée par une composante partielle distincte (10) disposée contre un pied (11) d'entretoise de profil de renforcement (6) et dont la forme correspond essentiellement à la géométrie de renforcement habituelle.

7. Elément de structure métallique selon une des revendications 1 à 6, **caractérisé en ce que** la somme de toutes les longueurs de surfaces limites (L₁, L₂, L₃ et Lᵢ) soit supérieure ou au moins égale à l'épaisseur moyenne du profil de renforcement (2) (Lᵢ T_{moyen}).

8. Elément de structure métallique selon une des revendications 1 à 7, **caractérisé en ce que** la surface limite (5 ; 5' ; 5") a été disposée dans le profil de renforcement (2), de telle sorte qu'une fissure s'étendant perpendiculairement par rapport à la direction de charge (dans la direction de l'entretoise) rencontre esentiellement la surface limite (5 ; 5' ; 5") en angle droit.

9. Elément de structure métallique selon une des revendications 1 à 8, **caractérisé en ce que** la surface à section transversale résiduelle (A₁) d'un pied d'entretoise (11) relié intégralement à la tôle (4) est plus petite que la moitié de la surface à section transversale totale du profil de renforcement (2) (A₁ < Aₜₒₜ/2).

10. Elément de structure métallique selon une des revendications précédentes, **caractérisé en ce que** la composante distincte (8 ; 10 ; 12) a été constituée à partir d'autres matériaux ou alliages de matériaux, en tant qu'élément de structure (1).

11. Elément de structure métallique selon la revendication 10, **caractérisé en ce que** certains alliages de matériaux pour composante distincte (8 ; 10 ; 12) se composent d'éléments organiques, métalliques et/ou céramiques.
